# EUROPÄISCHE PATENTANMELDUNG

(11) **EP 3 722 037 A1**
(43) Veröffentlichungstag der Anmeldung: **14.10.2020**
(21) Anmeldenummer: 19168535.3
(22) Anmeldetag: 10.04.2019
(51) Int. Cl.: B23K 9/02, B23K 9/09, B23K 9/167, B23K 9/173, B23K 9/095

(54) **MEHRFACH-IMPULSSCHWEISSVERFAHREN**

(71) Anmelder: FRONIUS INTERNATIONAL GmbH, 4643 Pettenbach (AT)
(72) Erfinder: Frauenschuh, Rupert, 4643 Pettenbach (AT); Artelsmair, Josef, 4643 Pettenbach (AT); Söllinger, Dominik, 4643 Pettenbach (AT); Muss, Michael, 4643 Pettenbach (AT)
(74) Vertreter: Patentanwälte Pinter & Weiss OG

(57) **Zusammenfassung**

Um in einem Mehrfach-Impulsschweißverfahren die zumindest zwei gleichzeitig mittels Schweißgeräte (1a. 1b) durchgeführten Impulsschweißprozesse aufeinander zu synchronisieren, ist vorgesehen, dass die Schweißgeräte (1a. 1b) mittels einer Kommunikationsverbindung (15) miteinander verbunden werden und über die Kommunikationsverbindung (15) eine Synchronisationsinformation (SI) von einem sendenden Schweißgerät (1a) an zumindest ein empfangendes Schweißgerät (1b) gesendet wird und diese Synchronisationsinformation (SI) im empfangenden Schweißgerät (1b) verwendet wird, um den mit dem empfangenden Schweißgerät (1b) ausgeführten Impulsschweißprozess auf den mit dem sendenden Schweißgerät (1a) ausgeführten Impulsschweißprozess zu synchronisieren.

## Beschreibung

Die gegenständliche Erfindung betrifft ein Verfahren zur Synchronisierung von zumindest zwei Impulsschweißprozessen zur Durchführung eines Mehrfach-Impulsschweißverfahrens, wobei ein Impulsschweißprozess aus periodisch mit einer Impulsfrequenz wiederholten Schweißzyklen mit einer Impulsstromphase und einer Grundstromphase besteht, wobei jeder Impulsschweißprozess mit einem Schweißgerät durchgeführt wird. Ferner betrifft die Erfindung eine Anordnung zur Durchführung eines Mehrfach-Impulsschweißverfahrens.

Die gegenständliche Erfindung betrifft das Impulsschweißen mit abschmelzender oder nicht abschmelzender Schweißelektrode mit Impulslichtbogen. Bei diesem Schweißverfahren wechseln sich regelmäßig mit vorgegebener Impulsfrequenz ein Grundschweißstrom und ein dazu erhöhter Impulsschweißstrom ab. Während der Grundschweißstromphase mit dem Grundschweißstrom brennt der Lichtbogen mit geringer Leistung um das Schmelzbad flüssig zu halten. Während der Impulsstromphase mit dem Impulsschweißstrom bildet sich ein großer Tropfen des Schweißdrahtes als Zusatzwerkstoff, der letztendlich abgelöst wird und ins Schmelzbad fällt. Der Schweißdraht kann dabei gleichzeitig auch als abschmelzende Schweißelektrode dienen, beispielsweise beim MIG (Metall Inertgas) oder MAG (Metall Aktivgas) Schweißen, oder kann zu einem zwischen einer nicht abschmelzenden Schweißelektrode und dem Werkstück brennenden Lichtbogen zugeführt werden, beispielsweise beim WIG (Wolfram Inertgas) Schweißen. Im Falle des WIG Schweißen wird das Schweißverfahren häufig auch als DC Puls oder WIG AC bezeichnet. In Abhängigkeit vom Drahtdurchmesser und vom Werkstoff des Schweißdrahtes sollen beim MIG/MAG Schweißen die Schweißdrahtvorschubgeschwindigkeit und die Impulsfrequenz so gewählt und aneinander angepasst werden, dass bei jedem Stromimpuls ein Tropfen erzeugt und abgelöst wird. Schweißdrahtvorschubgeschwindigkeit und Impulsfrequenz sind dabei voneinander abhängig. Bei unpassend gewählten Werten für die Schweißdrahtvorschubgeschwindigkeit und die Impulsfrequenz kann kein stabiler Schweißprozess realisiert werden und/oder kann keine gute Schweißqualität erzielt werden. Mit dem Impulsschweißen kann der Wärmeeintrag in das Werkstück reduziert und kontrolliert werden, womit auch dünnere Werkstücke geschweißt werden können. Zusätzlich ergeben sich mit dem Impulsschweißen qualitativ hochwertige Schweißergebnisse, beispielsweise lassen sich damit Spritzer stark reduzieren.

Um die Schweißleistung zu erhöhen, sind auch Mehrfach-Impulsschweißverfahren, beispielsweise ein Tandem-Impulsschweißverfahren, bekannt geworden, bei denen zumindest zwei Impulsschweißverfahren gleichzeitig betrieben werden. Vorzugsweise schmelzen dabei zumindest zwei Schweißdrähte in ein gemeinsames Schmelzbad ab. Die einzelnen Impulsschweißverfahren können aber auch jeweils ein eigenes Schmelzbad haben. Hierfür werden für jeden Impulsschweißprozess eigenständige Schweißgeräte benötigt, also jeweils eine Stromquelle, ein Schweißbrenner und gegebenenfalls eine Schweißdrahtvorschubeinheit. Mit jedem Schweißgerät wird ein Impulsschweißverfahren realisiert. Das Mehrfach-Impulsschweißen kann für MIG/MAG so betrieben werden, dass die Schweißprozesse gestartet werden und unabhängig voneinander betrieben werden, dass also die Schweißdrahtvorschubgeschwindigkeit und die Impulsfrequenz für jeden Schweißprozess eigens eingestellt werden. Beim WIG Schweißen werden üblicherweise nur die Impulsfrequenzen eingestellt, wobei aber auch die

Schweißdrahtvorschubgeschwindigkeit des Zusatzwerkstoffes eingestellt werden könnte. Das ist für den Schweißer aber aufwendiger, da in allen Schweißgeräten die Schweißparameter entsprechend gesetzt werden müssen. Abgesehen davon hat man damit wenig bis keinen Einfluss auf eine allfällige gegenseitige Beeinflussung durch die gleichzeitig ablaufenden Schweißprozesse, was die Schweißqualität vermindern kann.

Daher ist auch schon ein Tandem-Impulsschweißverfahren mit synchronisierten Schweißprozessen bekannt geworden, bei dem einem Schweißgerät eine Impulsfrequenz vorgegeben wird, der das andere Schweißgerät nachfolgt. Beide Schweißprozesse sind damit aufeinander synchronisiert und schweißen mit derselben Impulsfrequenz. Das kann aber beim MIG/MAG Schweißen zu Problemen führen, wenn der Schweißdraht des nachgeführten Schweißprozesses mit einer anderen Schweißdrahtvorschubgeschwindigkeit zugeführt wird als im anderen Schweißprozess, was häufig zur Erhöhung der Prozessstabilität erwünscht ist. Auch beim WIG Schweißen wird synchronisierte Schweißprozesse angestrebt. Eine geringere Schweißdrahtvorschubgeschwindigkeit erfordert aber normalerweise auch eine niedrigere Impulsfrequenz, weil die Leistungsbilanz von Drahtvorschub und Schweißstrom aufeinander abgestimmt sein müssen. Bei einem zu großen Unterschied zwischen der Schweißdrahtvorschubgeschwindigkeit im führenden Impulsschweißprozess und im nachgeführten Impulsschweißprozesskann es daher passieren, dass der nachgeführte Impulsschweißprozessmit einer zu hohen Impulsfrequenz (die vom führenden Schweißprozess übernommen wurde) betrieben wird, wodurch sich unter Umständen mit dem nachgeführten Impulsschweißprozess kein stabiler Schweißprozess realisieren lässt oder sich ein schlechteres Schweißergebnis (z.B. Schweißspritzer) ergibt.

Um dieses Problem zu beheben wurde in der DE 10 2007 016 103 A1 bereits vorgeschlagen, die Impulsfrequenz des nachgeführten Impulsschweißprozesses eines Tandem-Impulsschweißverfahrens als ein ganzzahliges Vielfaches der Impulsfrequenz des führenden Impulsschweißprozesses eingestellt werden kann. Dabei sollen die Impulsfrequenzen der beiden Impulsschweißprozesse so gewählt werden, dass sich die Impulsstromphasen nicht überschneiden. Es wird jedoch nicht ausgeführt, wie die Synchronisation der beiden Impulsschweißprozesse realisiert werden kann.

Es ist daher eine Aufgabe der gegenständlichen Erfindung ein Verfahren zur Synchronisierung mehrerer gleichzeitig ablaufender Impulsschweißprozesse in einem Mehrfach-Impulsschweißverfahren anzugeben.

Diese Aufgabe wird erfindungsgemäß dadurch gelöst, dass die Schweißgeräte mittels einer Kommunikationsverbindung miteinander verbunden werden und über die Kommunikationsverbindung eine Synchronisationsinformation von einem sendenden Schweißgerät an zumindest ein empfangendes Schweißgerät gesendet wird und diese Synchronisationsinformation im empfangenden Schweißgerät verwendet wird, um den mit dem empfangenden Schweißgerät ausgeführten Impulsschweißprozess auf den mit dem sendenden Schweißgerät ausgeführten Impulsschweißprozess zu synchronisieren. Über die Kommunikationsverbindung kann damit auf einfache Weise die Synchronisationsinformation gesendet werden, die für die Synchronisation der Impulsschweißprozesse benötigt wird. Die Synchronisation kann damit automatisiert erfolgen, ohne dass ein Schweißer eingreifen muss, oder Schweißparameter setzen muss.

In einer vorteilhaften Ausgestaltung sendet das sendende Schweißgerät als Synchronisationsinformation einen Synchronisationspuls an zumindest ein empfangendes Schweißgerät, wobei der Synchronisationspuls in einem definierten zeitlichen Bezug zum Schweißzyklus des Impulsschweißprozesses des sendenden Schweißgerätes steht, und der Schweißzyklus des Impulsschweißprozess des empfangenden Schweißgerätes auf den empfangenen Synchronisationspuls synchronisiert wird. Mit dem Synchronisationspuls ist das empfangende Schweißgerät in der Lage den durchzuführenden Impulsschweißprozess auf den Impulsschweißprozess im sendenden Schweißgerät zu synchronisieren, um den gewünschten Bezug der beiden Impulsschweißprozesse zueinander sicherzustellen. Um ein Auseinanderdriften der beiden Impulsschweißprozesse zu verhindern, könnte ein solcher Synchronisationspuls auch in regelmäßigen Abständen wiederholt werden.

Für eine einfache Implementierung des Mehrfach-Impulsschweißverfahrens kann die Impulsfrequenz des Impulsschweißprozesses des empfangenden Schweißgerätes im empfangenden Schweißgerät bekannt sein oder aus einer bekannten Schweißkennlinie ermittelt werden.

Alternativ kann als Synchronisationsinformation zusätzlich die Impulsfrequenz des sendenden Schweißgerätes oder die vom empfangenden Schweißgerät einzustellende Impulsfrequenz an das empfangende Schweißgerät gesendet werden. In einer vorteilhaften Ausgestaltung kann im empfangenden Schweißgerät mittels eines bekannten Frequenzteilers aus der erhaltenen Impulsfrequenz des sendenden Schweißgerätes die vom empfangenden Schweißgerät einzustellende Impulsfrequenz ermittelt werden. Das ermöglicht es, den Impulsschweißprozess im empfangenden Schweißgerät dem Impulsschweißprozess im sendenden Schweißgerät nachzuführen.

Eine weitere vorteilhafte Ausgestaltung ergibt sich, wenn das sendende Schweißgerät als Synchronisationsinformation, zumindest während der Synchronisation, laufend Synchronisationspulse mit der Impulsfrequenz des sendenden Schweißgerätes an das empfangende Schweißgerät sendet und das empfangende Schweißgerät aus der Periode der empfangenen Synchronisationspulse die Impulsfrequenz des sendenden Schweißgerätes ermittelt und daraus mittels eines bekannten Frequenzteilers die im empfangenden Schweißgerät einzustellende Impulsfrequenz ermittelt. Das ermöglicht es, den Impulsschweißprozess im empfangenden Schweißgerät dem Impulsschweißprozess im sendenden Schweißgerät nachzuführen.

Besonders vorteilhaft wird der Frequenzteiler im empfangenden Schweißgerät aus einer bekannten Schweißkennlinie ermittelt und aus der Impulsfrequenz des sendenden Schweißgerätes und dem Frequenzteiler die vom empfangenden Schweißgerät einzustellende Impulsfrequenz ermittelt. Vorzugsweise wird aus der Schweißkennlinie aus einer eingestellten Schweißdrahtvorschubgeschwindigkeit des Impulsschweißprozesses des empfangenden Schweißgerätes eine für den Impulsschweißprozess benötigte Impulsfrequenz ermittelt, wobei aus der benötigten Impulsfrequenz und der erhaltenen Impulsfrequenz des sendenden Schweißgerätes der Frequenzteiler ermittelt wird. Damit kann die Impulsfrequenz des empfangenden Schweißgerätes unter Berücksichtigung einer hinterlegten Schweißkennlinie optimal gesetzt werden, womit der Schweißprozess bei der Ermittlung der Impulsfrequenz Berücksichtigung findet.

Für das Mehrfach-Impulsschweißverfahren kann es vorteilhaft sein, wenn der Synchronisationspuls mit einer vorgegebenen Phasenverschiebung zum Beginn des Schweißzyklus im sendenden Schweißgerät gesendet wird und/oder der Schweißzyklus im empfangenden Schweißgerät mit einer vorgegebenen Phasenverschiebung nach dem Empfang des Synchronisationspulses gestartet wird. Auf diese Weise kann eine gewünschte Phasenlage der Impulsschweißprozesse sichergestellt werden.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 eine Anordnung zum Durchführen eines Mehrfach-Impulsschweißverfahrens,
Fig.2 die Schweißzyklen in einem Mehrfach-Impulsschweißverfahren,
Fig.3 die Synchronisation der Impulsschweißprozesse mittels Kommunikationsverbindung zwischen den beteiligten Schweißgeräten,
Fig.4 die Synchronisation mittels Synchronisationspulsen,
Fig.5 eine mögliche Schweißkennlinie eines Impulsschweißprozesses,
Fig.6 Impulsschweißprozesse mit Zwischenpulsen und
Fig.7 ein Umschalten der Synchronisation während des Schweißens.

Die Erfindung wird nachfolgend für ein Tandem-Impulsschweißverfahren, also mit zwei Impulsschweißprozessen, als Beispiel eines Mehrfach-Impulsschweißverfahrens, erläutert. Es ist aber natürlich denkbar, die nachfolgenden Ausführungen auf ein Mehrfach-Impulsschweißverfahren mit mehr als zwei Impulsschweißverfahren auszuweiten. Ein Mehrfach-Impulsschweißverfahren zeichnet sich insbesondere dadurch aus, dass gleichzeitig zumindest zwei Impulsschweißprozesse laufen, bei einem Tandem-Impulsschweißverfahren folglich zwei Impulsschweißprozesse. Die mehreren Impulsschweißprozesse können alle in dasselbe Schmelzbad arbeiten, es können aber auch verschiedene Impulsschweißprozesse in teilweise verschiedene Schmelzbäder arbeiten.

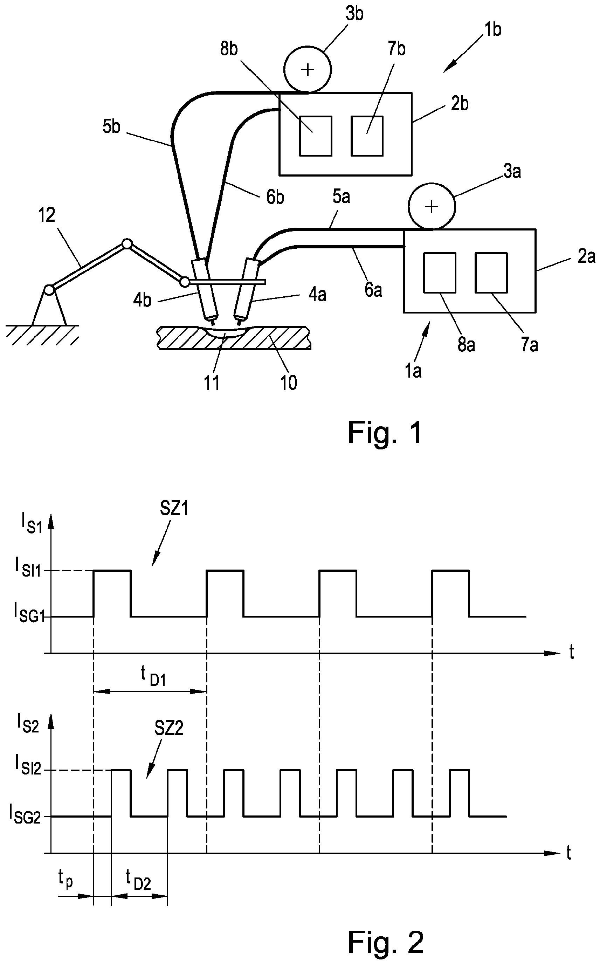

In Fig.1 ist eine mögliche Konfiguration für ein Tandem-Impulsschweißverfahren schematisch dargestellt. Es sind zwei separate Schweißgeräte 1a, 1b mit jeweils einer Stromquelle 2a, 2b, einer Schweißdrahtvorschubeinheit 3a, 3b (beim WIG Schweißen auch ohne Schweißdrahtvorschubeinheit 3a, 3b) und einem Schweißbrenner 4a, 4b vorgesehen. Die Stromquellen 2a, 2b stellen jeweils die benötigte Schweißspannung zur Verfügung, die jeweils an den Schweißdraht 5a, 5b, als abschmelzende Schweißelektrode des Schweißprozesses, angelegt wird. Dazu kann in einem Schweißbrenner 4a, 4b beispielsweise eine Kontakthülse vorgesehen sein, an die die Schweißspannung angelegt wird, z.B. über eine Schweißleitung 6a, 6b, und die vom Schweißdraht 5a, 5b kontaktiert wird. Es kann aber auch ein Schweißbrenner 4a, 4b mit einer nicht abschmelzenden Schweißelektrode verwendet werden, an die die Schweißspannung über die Schweißleitung 6a, 6b angelegt wird. In diesem Fall wird der Schweißdraht 5a, 5b in den Lichtboden zwischen der nicht abschmelzenden Schweißelektrode und dem Werkstoff brennenden Lichtbogen zugeführt.

Damit fließt jeweils ein bestimmter Schweißstrom über die Schweißelektrode, wobei hierfür natürlich eine, in Fig.1 nicht dargestellte, zweite Schweißleitung zur Kontaktierung des Werkstückes vorgesehen ist. Der Schweißdraht 5a, 5b wird von der Schweißdrahtvorschubeinheit 3a, 3b jeweils mit einer bestimmten

Schweißdrahtvorschubgeschwindigkeit zugeführt. Die Schweißdrahtvorschubeinheit 3a, 3b kann jeweils im Schweißgerät 1a, 1b integriert sein, kann aber auch eine separate Einheit sein. Der Schweißdraht 5a, 5b und die Schweißleitung 6a, 6b eines Schweißgerätes 1a, 1b, und gegebenenfalls auch weitere Leitungen zwischen der Stromquelle 2a, 2b und dem Schweißbrenner 4a, 4b (beispielsweise eine Steuerleitung oder eine Kühlmittelleitung), können auch in einem gemeinsamen, auch mehreren, Schlauchpaket geführt sein. Das Schlauchpaket kann an den Schweißbrenner 4a, 4b und an die Stromquelle 2a, 2b über geeignete Kupplungen angekoppelt werden. In einem Schweißgerät 1a, 1b ist auch eine Steuereinheit 7a, 7b vorgesehen, die den Impulsschweißprozess steuert und überwacht. Hierfür sind in der Steuereinheit 7a, 7b benötigte Schweißparameter, wie beispielswiese die Impulsfrequenz, die Schweißdrahtvorschubgeschwindigkeit, die Werte der Schweißströme, die Impulsstromdauer, Grundstromdauer etc., vorgegeben oder einstellbar. Zur Eingabe oder zur Anzeige gewisser Schweißparameter oder eines Schweißstatus kann auch eine Eingabe-/Ausgabeeinheit 8a, 8b vorgesehen sein. Ein solches Schweißgerät 1a, 1b ist natürlich hinlänglich bekannt und muss hier nicht näher beschrieben werden. Für ein Mehrfach-Impulsschweißverfahren mit mehr als zwei Impulsschweißprozessen sind natürlich entsprechend mehr Schweißgeräte 1a, 1b vorgesehen. Mehrere Schweißgeräte 1a, 1b eines Mehrfach-Impulsschweißverfahrens, gegebenenfalls auch mit den zugehörigen Schweißdrahtvorschubeinheiten 3a, 3b, können auch in einem gemeinsamen Gehäuse angeordnet sein.

Zur Realisierung eines Tandem-Schweißprozesses sind die beiden Schweißbrenner 4a, 4b im gezeigten Ausführungsbeispiel örtlich relativ zueinander angeordnet, sodass diese in ein gemeinsames Schmelzbad 11 an einem Werkstück 10 arbeiten. Diese Anordnung zueinander kann fix sein, beispielsweise in dem beide Schweißbrenner 4a, 4b an einem Schweißroboter 12 angeordnet werden, der beide Schweißbrenner 4a, 4b führt (so wie in Fig.1 angedeutet). Die Anordnung kann aber auch veränderlich sein, beispielsweise in dem je ein Schweißbrenner 4a, 4b von einem Schweißroboter 12 geführt wird. Es ist auch unerheblich, ob die Schweißbrenner 4a, 4b bezogen auf die Schweißrichtung hintereinander, nebeneinander oder sonst irgendwie versetzt zu einander angeordnet sind. Ebenso ist es unerheblich, ob mit einem Impulsschweißprozess ein Verbindungsschweißen oder ein Auftragsschweißen, oder ein sonstiges Schweißverfahren, realisiert wird. Diese Ausführungen gelten natürlich in analoger Weise auch für einen Mehrfach-Impulsschweißprozess mit mehr als zwei Impulsschweißprozessen.

Anhand der Fig.2 wird das hinlänglich bekannte Impulsschweißverfahren anhand des Verlaufs des Schweißstromes I_{S} über die Zeit t erläutert. Während des Impulsschweißens wechseln sich ein Grundstrom I_{SG} und ein demgegenüber erhöhter Impulsstrom I_{SI} periodisch mit einer vorgegebenen Impulsfrequenz f_{D} ab. Die Impulsfrequenz f_{D} ergibt sich natürlich als Kehrwert der Periodendauer t_{D} eines Schweißzyklus SZ bestehend aus einer Grundstromphase mit dem Grundstrom I_{SG} und einer Impulsstromphase mit dem Impulsstrom I_{SI}. Während der Impulsstromphase soll jeweils ein Schweißtropfen in das jeweilige Schmelzbad 11 abgelöst werden. Während einer Schweißung kann sich die Impulsfrequenz f_{D} und/oder der Wert des Grundstromes I_{SG} oder des Impulsstromes I_{SI} auch ändern.

Die zeitlichen Verläufe der Schweißströme I_{S1}, I_{S2} sind in Fig.2 natürlich idealisiert und vereinfacht dargestellt. In echt werden sich natürlich gewisse Stromrampen an den Flanken ergeben. Ebenso ist es oftmals vorgesehen, dass der Schweißstrom I_{S} beim Übergang vom Impulsstrom I_{SI} zum Grundstrom I_{SG} stufenförmig, oder mit einem anderen Stromverlauf, abfällt, um die Tropfenablöse zu unterstützen. Auch sind oftmals in der Grundstromphase kurze Zwischenstromimpulse vorgesehen, um die Prozessstabilität zu erhöhen, wie weiter unten noch ausführlicher beschrieben wird. Das ändert aber nichts an der Periodendauer t_{D} eines Schweißzyklus SZ und an der sich daraus ergebenden Impulsfrequenz f_{D}.

Bei einem erfindungsgemäßen Tandem-Impulsschweißprozess sind die beiden Impulsschweißprozesse aufeinander synchronisiert, indem die Impulsfrequenzen f_{D1}=1/t_{D1}, f_{D2}=1/t_{D2} der beiden Impulsschweißprozesse in einem bestimmten vorgegebenen Bezug zueinander stehen und indem die sich ergebenden Schweißzyklen SZ1, SZ2 einen bestimmten vorgegebenen Phasenbezug zueinander haben. Vorzugsweise gilt, dass eine Impulsfrequenz ein ganzzahliges Vielfaches der anderen Impulsfrequenz ist. Das gilt natürlich in analoger Weise wieder allgemein auch für ein Mehrfach-Impulsschweißverfahren, in dem die einzelnen Impulsschweißprozesse aufeinander synchronisiert sind. Im Beispiel der Fig.2 ist die Impulsfrequenz f_{D2}, beispielsweise der nachgeführten Impulsschweißprozesses, doppelt so hoch wie die Impulsfrequenz f_{D1}, beispielsweise des führenden Impulsschweißprozesses, was aber auch umgekehrt sein kann. Zusätzlich kann der Schweißstromverlauf mit der höheren Impulsfrequenz f_{D2} gegenüber dem Schweißstromverlauf mit der niedrigeren Impulsfrequenz f_{D1} um eine Phasenverschiebung t_{P} zeitlich verschoben sein, d.h. dass die Impulse mit Impulsstrom I_{SI} zeitlich versetzt beginnen. Die Phasenverschiebung kann aber natürlich auch als Phasenwinkel bezogen auf die Impulsfrequenz f_{D1} des führenden Impulsschweißprozesses angegeben sein.

Üblicherweise wird der führende Impulsschweißprozess die höhere Impulsfrequenz f_{D1} aufweisen und der nachgeführte Impulsschweißprozess die demgegenüber niedrigere oder gleiche Impulsfrequenz f_{D2}. Im Fall eine Mehrfach-Impulsschweißverfahrens gibt es einen führenden Impulsschweißprozess und mehrere nachgeführte Impulsschweißprozesse, wobei auch in diesem Fall der führende Impulsschweißprozess vorzugsweise die höchste Impulsfrequenz aufweist und die nachgeführten Impulsschweißprozesse demgegenüber niedrigere oder gleiche Impulsfrequenzen. Die Impulsfrequenzen der nachgeführten Impulsschweißprozesse müssen aber nicht zwingend gleich sein.

Für die Durchführung des beschriebenen Tandem-Impulsschweißprozesses müssen in den beiden Schweißgeräte 1a, 1b, bzw. in den Steuereinheiten 7a, 7b, die jeweilige Impulsfrequenz f_{D1}, f_{D2} und auch eine allfällige Phasenverschiebung t_{P} bekannt sein. Die zeitlichen Verläufe der Schweißströme I_{S1}, I_{S2} müssen also aufeinander synchronisiert sein. Um das zu bewerkstelligen müssen die beiden Schweißgeräte 1a, 1b aufeinander synchronisiert werden.

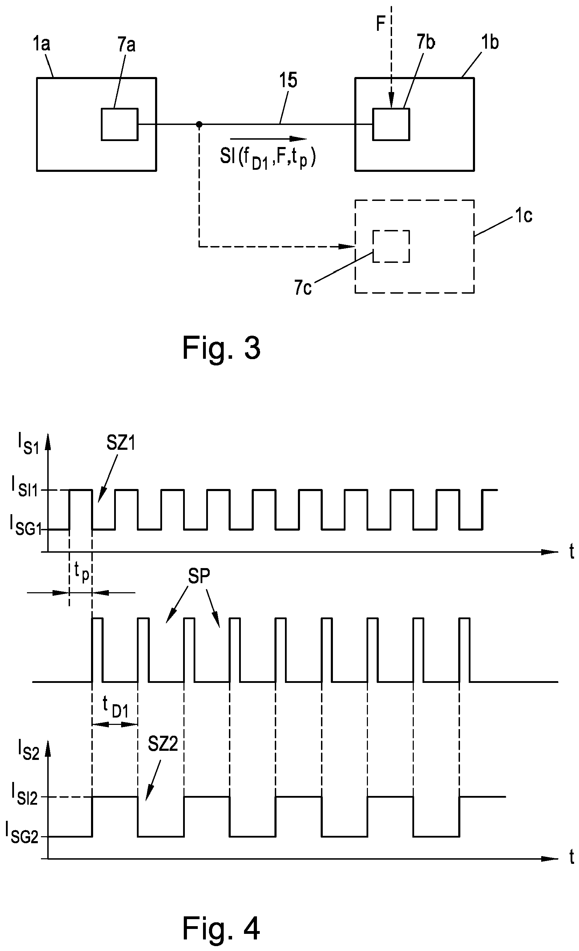

Hierfür sind die Schweißgeräte 1a, 1b, 1c des Mehrfach-Impulsschweißverfahrens, in der Regel die Steuereinheiten 7a, 7b, 7c der Schweißgeräte 1a, 1b, 1c, über eine Kommunikationsverbindung 15, die sowohl drahtgebunden als auch drahtlos sein kann, miteinander verbunden, wie in Fig.3 dargestellt. Über die Kommunikationsverbindung 15 wird zu Beginn des Mehrfach-Impulsschweißprozesses eine Synchronisationsinformation SI von einem Schweißgerät 1a, vorzugsweise des führenden Impulsschweißprozesses, an das andere Schweißgerät 1b, 1c, vorzugsweise der nachgeführten Impulsschweißprozesse, gesendet. Diese Synchronisationsinformation SI wird im empfangenden Schweißgerät 1b, 1c verwendet, um den mit diesem Schweißgerät 1b, 1c ausgeführten Impulsschweißprozess an den mit dem sendenden Schweißgerät 1a ausgeführten Impulsschweißprozess anzupassen, insbesondere zu synchronisieren.

Im einfachsten Fall ist die Synchronisationsinformation SI ein einzelner Synchronisationspuls SP, der von einem sendenden Schweißgerät 1a über die Kommunikationsverbindung 15 gesendet wird. Der Synchronisationspuls SP steht dabei in einem definierten zeitlichen Bezug zum Schweißzyklus SZ1 im sendenden Schweißgerät 1a. Vorzugsweise wird der Synchronisationspuls SP zu Beginn eines Schweißzyklus SZ1 (beispielsweise der Beginn einer Grundstromphase) mit der Impulsfrequenz f_{D1} im sendenden Schweißgerät 1a gesendet. Der Synchronisationspuls SP kann auch mit einer bestimmten hinterlegten oder eingestellten Phasenverschiebung t_{P} dazu, gesendet werden. Um eine genauere Synchronisation zu erzielen können in der Phasenverschiebung tp auch bekannte Verzögerungszeiten, beispielsweise der Übertragung, einer Reaktionszeit des empfangenden Schweißgerätes 1b, 1c, etc., berücksichtigt werden.

Der Synchronisationspuls SP kann dabei als Strom- oder Spannungspuls auf einer drahtgebundenen Kommunikationsverbindung 15 zwischen den beiden Schweißgeräten 1a, 1b gesendet werden. Es ist aber auch möglich die Kommunikationsverbindung 15 als Datenbus auszuführen, auf dem Busnachrichten versendet werden. In diesem Fall kann der Synchronisationspuls SP als Busnachricht gesendet werden, was sowohl drahtgebunden (Kabel, Glasfaser, etc.), als auch drahtlos (Wifi, Bluetooth, etc.) realisiert werden kann. Im empfangenden Schweißgerät 1b, 1c wird der Schweißstromverlauf I_{S} auf den empfangenen Synchronisationspuls SP synchronisiert, beispielsweise indem ein Schweißzyklus SZ2 im empfangenden Schweißgerät 1b mit der Impulsfrequenz f_{D2} bei Empfang des Synchronisationspulses gestartet wird (beispielsweise mit der Grundstromphase). Die jeweilige Impulsfrequenz f_{D1}, f_{D2} kann in den Schweißgeräten 1a, 1b, 1c hinterlegt oder eingestellt sein.

Ebenso kann in einem Schweißgerät 1b, üblicherweise das nachgeführte Schweißgerät, eine Phasenverschiebung t_{P} hinterlegt oder eingestellt sein. Damit kann der Schweißzyklus SZ2 im empfangenden Schweißgerät 1b auch um eine Phasenverschiebung t_{P} nach Empfang des Synchronisationspulses SP gestartet werden.

Weitere benötigte Schweißparameter, wie die Schweißströme I_{SI1}, I_{SG1}, I_{SI2}, I_{SG2}, die Impulsstromdauern, Grundstromdauern etc., sind natürlich ebenso in den Schweißgeräten 1a, 1b, 1c hinterlegt oder eingestellt, sodass die Schweißgeräte 1a, 1b, 1c die Impulsschweißprozesse ausführen können.

An sich ist es für die Erfindung egal, welches Schweißgerät 1a, 1b das sendende, also dazu in der Synchronisation führende, und welches das empfangende, also das in der Synchronisation nachgeführte, ist. Das kann beispielsweise in den am Mehrfach-Impulsschweißverfahren beteiligten Schweißgeräten 1a, 1b, 1c hinterlegt oder eingestellt sein. Diese Einstellung kann sich natürlich auch ändern, auch während des Schweißens.

Diese Einstellung kann vom Schweißer vorgenommen werden, beispielsweise über die jeweilige Eingabe-/Ausgabeeinheit 8a, 8b.

Es kann aber auch eine übergeordnete Steuereinheit, z.B. eine Robotersteuerung oder Prozesssteuerung, vorgesehen sein, die mit den Schweißgeräten 1a, 1b, 1c verbunden ist, und die diese Einstellung vorgibt. Dazu können die Schweißgeräte 1a, 1b, 1c und die übergeordnet Steuereinheit über einen Datenbus parallel oder seriell miteinander verbunden sein, um diese Einstellung vornehmen zu können. Falls die Kommunikationsverbindung 15 als Datenbus ausgeführt ist, dann kann dieser Datenbus auch für diese Einstellung verwendet werden.

Ebenso ist es denkbar, dass die Einstellung wer in der Synchronisation führt im Schweißgerät 1a, 1b, 1c in Abhängigkeit von einem Schweißparameter, beispielsweise der Impulsfrequenz f_{D} oder der Schweißdrahtvorschubgeschwindigkeit v_{D} hinterlegt ist. Hier könnte beispielsweise vorgesehen sein, dass immer das Schweißgerät 1a, 1b, 1c, das den Impulsschweißprozess mit der höchsten Impulsfrequenz f_{D} ausführt, das sendende Schweißgerät ist und die anderen die empfangenden.

In einer Erweiterung können über die Kommunikationsverbindung 15 zusätzliche Informationen übertragen werden.

Beispielsweise kann das die Synchronisationsinformation SI sendende Schweißgerät 1a als Synchronisationsinformation SI auch die eigene Impulsfrequenz f_{D1} oder die vom empfangenden Schweißgerät 1b einzustellende Impulsfrequenz f_{D2} senden, beispielsweise in einer eigenen oder gleichen Busnachricht. Wird die eigene Impulsfrequenz f_{D1} gesendet, dann kann im empfangenden Schweißgerät 1b ein Frequenzteiler F hinterlegt oder eingestellt sein (wie in Fig.3 angedeutet). Mit dem Frequenzteiler F kann dann die Impulsfrequenz f_{D2} aus der empfangenen Impulsfrequenz f_{D1} einfach ermittelt werden als f_{D2} = f_{D1} / F. Hierbei ist es natürlich vorteilhaft wenn die beiden Impulsfrequenzen f_{D1}, f_{D2} in einem ganzzahligen Verhältnis (z.B. ½, ⅓, ¼) zueinander stehen, der Frequenzteiler F also eine ganze Zahl ist. Das ermöglicht es auch, die Impulsfrequenzen f_{D1}, f_{D2} während des Mehrfach-Impulsschweißprozesses zu verändern. Dazu reicht es beispielsweise, wenn das führende Schweißgerät 1a eine neue Impulsfrequenz f_{D1} an das nachgeführte Schweißgerät 1b senden, das dann anhand des Frequenzteilers F die Impulsfrequenz f_{D2} neu ermittelt und einstellt. Die Impulsfrequenz f_{D2} des empfangenden Schweißgerätes 1b folgt damit der Impulsfrequenz f_{D1} des sendenden Schweißgerätes 1a. Im anderen Fall erhält das empfangende Schweißgerät 1b direkt die einzustellende Impulsfrequenz f_{D2} vom sendenden Schweißgerät 1a, womit am empfangenden Schweißgerät 1b diesbezüglich keinerlei Einstellungen erforderlich sind. In beiden Fällen wird die Handhabung des Mehrfach-Impulsschweißprozesses für den Schweißer erleichtert.

Grundsätzlich kann genauso auch für die gewünschte Phasenverschiebung t_{D} vorgegangen werden. Die Phasenverschiebung t_{D}, die auch Null sein kann, kann in einem Schweißgerät 1a, 1b hinterlegt oder eingestellt sein, oder kann von einem Schweißgerät 1a als Synchronisationsinformation SI an das andere Schweißgerät 1b gesendet werden, beispielsweise in einer eigenen Busnachricht oder in einer gemeinsamen Busnachricht mit anderer Synchronisationsinformation SI.

Die Phasenverschiebung t_{D} kann an einem Schweißgerät 1a, 1b auch variabel eingestellt werden, beispielsweise als Zeit oder auch als Prozentangabe. Vorzugsweise kann die Phasenverschiebung t_{D} zwischen 0-100% in einzelnen Prozentschritten, z.B. in 1% Schritten, variabel eingestellt werden. Dabei entspricht beispielsweise 25% einer Phasenverschiebung von 90° und 50% einer Phasenverschiebung von 180°. Die Einstellung der Phasenverschiebung t_{D} kann vom Schweißer vorgenommen werden, oder kann auch von einer übergeordneten Steuereinheit vorgegeben werden, beispielsweise wieder über einen Datenbus wie oben beschrieben.

Es wäre auch denkbar, dass die gewünschte Phasenverschiebung t_{D} über den Zeitpunkt des Absendens der Synchronisationsinformation SI synchronisiert wird. Das sendende Schweißgerät 1a kann beispielsweise die Synchronisationsinformation SI um die Phasenverschiebung t_{D} nach Beginn der Impulsstromphase verschoben an das empfangende Schweißgerät 1b senden. In diesem Fall wäre die gewünschte Phasenverschiebung t_{D} im sendenden Schweißgerät 1a hinterlegt oder dort eingestellt. Das empfangende Schweißgerät 1b beginnt dann die eigene Impulsstromphase oder Grundstromphase (je nach Synchronisierung) bei Empfang der Synchronisationsinformation SI, wodurch sich automatisch die gewünschte Phasenverschiebung t_{D} einstellt. Somit ist eine Änderung/Anpassung der Phasenverschiebung t_{D} während des Schweißprozesses möglich.

In einer weiteren möglichen Ausgestaltung sendet das sendende Schweißgerät 1a, beispielsweise das im Tandem-Impulsschweißprozesses führende Schweißgerät, laufend als Synchronisationsinformation SI Synchronisationspulse SP in der eigenen Impulsfrequenz f_{D1}, also mit einer Zeitperiode t_{D1}, wie in Fig.4 dargestellt. Die Synchronisationspulse SP stehen wiederum in einen definierten zeitlichen Bezug zum Schweißzyklus SZ1 im sendenden Schweißgerät. Beispielsweise wird ein Synchronisationspuls SP bei jedem Beginn eines Schweißzyklus SZ1 gesendet, hier zu Beginn der Impulsstromphase unter Berücksichtigung einer Phasenverschiebung t_{P}. Diese Synchronisationspulse SP können wiederum als elektrische Strom- oder Spannungspulse auf einer elektrischen Leitung als Kommunikationsverbindung 15 gesendet werden oder als Busnachrichten auf einem drahtgebundenen oder drahtlosen Datenbus als Kommunikationsverbindung 15. Das empfangende Schweißgerät 1b, beispielsweise das im Tandem-Impulsschweißprozesses nachgeführte Schweißgerät, kann sich in einer Auswerteeinheit (Hardware und/oder Software), beispielsweise in der Steuereinheit 7b, aus der Periode t_{D1} der empfangenen Synchronisationspulse einfach die Impulsfrequenz f_{D1} des sendenden Schweißgerätes 1a ermitteln, beispielsweise in einer Komparatorschaltung mit Zähler oder aus einem Zeitstempel der empfangenen Busnachrichten.

Der Schweißzyklus SZ2 im empfangenden Schweißgerät 1b wird wieder zeitlich auf die Synchronisationspulse SP synchronisiert, beispielsweise indem der Beginn eines Schweißzyklus SZ2 im empfangenden Schweißgerät 1b auf den Empfang eines Synchronisationspulses SP synchronisiert wird.

Im empfangenden Schweißgerät 1b kann wiederum ein Frequenzteiler F hinterlegt sein, aus dem dann wieder die Impulsfrequenz f_{D2} im empfangenden Schweißgerät 1b aus f_{D2} = f_{D1}/F ermittelt werden kann. Hierbei ist es natürlich vorteilhaft wenn die beiden Impulsfrequenzen f_{D1}, f_{D2} in einem ganzzahligen Verhältnis zueinander stehen. Nachdem die Synchronisationspulse SP, zumindest während der Synchronisation, laufend gesendet werden folgt die Impulsfrequenz f_{D2} des empfangenden Schweißgerätes 1b automatisch der Impulsfrequenz f_{D1} des sendenden Schweißgerätes 1a.

Das sendende Schweißgerät 1a kann neben den Synchronisationspulsen SP auch den einzustellenden Wert der Impulsfrequenz f_{D2} an das empfangende Schweißgerät 1b senden, beispielsweise wieder in einer eigenen oder der gleichen Busnachricht. In diesem Fall können die Synchronisationspulse SP zur Sicherstellung und Kontrolle der Synchronisation der beiden Schweißgeräte 1a, 1b verwendet werden.

Über eine Zeitverschiebung der Synchronisationspulse SP bezogen auf den Schweißzyklus SZ1 im sendenden Schweißgerät 1a kann natürlich wieder eine Phasenverschiebung t_{P} der beiden Stromverläufe in den beiden Schweißgeräten 1a, 1b eingestellt werden. Das empfangende Schweißgerät 1b synchronisiert dabei den zeitlichen Verlauf des Schweißstromes I_{S2} auf die empfangenen Synchronisationspulse SP, wie in Fig.4 dargestellt. Alternativ kann eine gewünschte Phasenverschiebung t_{P} als Schweißparameter im empfangenden Schweißgerät 1b hinterlegt oder eingestellt sein. In diesem Fall würde das empfangende Schweißgerät 1b den Schweißzyklus SZ2 zeitlich um die Phasenverschiebung t_{D} verschoben auf den Empfang des Synchronisationspulses SP beziehen. Grundsätzlich ist aber auch beides gleichzeitig möglich.

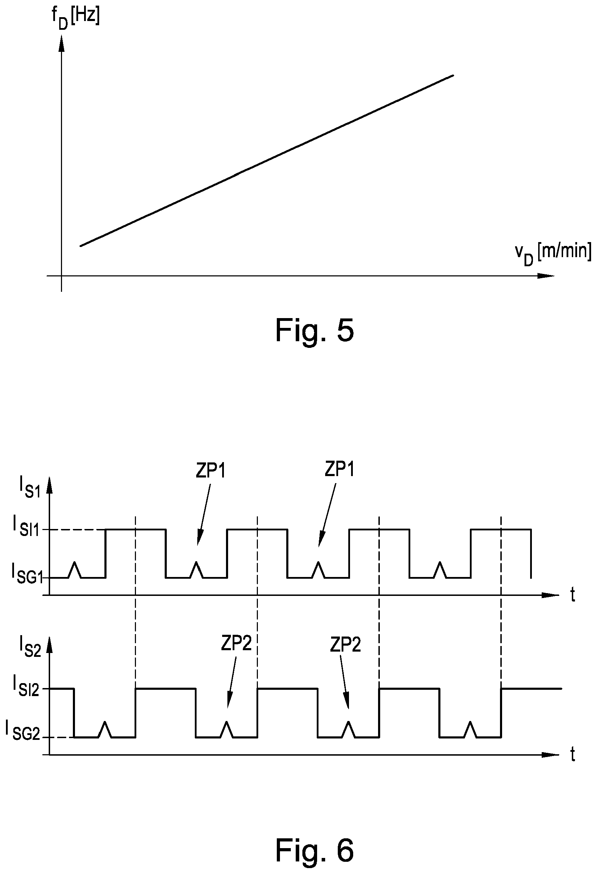

Die für den Impulsschweißprozess benötigte Impulsfrequenz f_{D1}, f_{D2}, oder ein Frequenzteiler F, kann vom Schweißer an den Schweißgeräten 1a, 1b eingestellt werden. Das erfordert allerdings ein tiefes Prozesswissen des Schweißers, was nicht vorausgesetzt werden kann. Daher kann vorgesehen sein, dass eine Impulsfrequenz f_{D1}, f_{D2} aus anderen gesetzten Schweißparametern, insbesondere aus einer Schweißdrahtvorschubgeschwindigkeit v_{D} (die üblicherweise wiederum abhängig vom Schweißstrom ist) oder einem Schweißstrom I_{S}, abgeleitet wird. Im Schweißgerät 1a, 1b, beispielsweise in der Steuereinheit 7a, 7b oder einer Speichereinheit, kann dazu eine Schweißkennlinie für verschiedene Schweißdrähte, wie in Fig.5 am Beispiel der Schweißdrahtvorschubgeschwindigkeit v_{D} dargestellt, hinterlegt sein. Je nach eingestellter Schweißdrahtvorschubgeschwindigkeit v_{D} kann daraus die benötigte Impulsfrequenz f_{D} entnommen werden. Zur Synchronisation ist es vorteilhaft, wenn eine derart ermittelte Impulsfrequenz f_{D} auf das nächste ganzzahlige Verhältnis zur anderen Impulsfrequenz f_{D} gesetzt wird. Daraus kann dann auch ein benötigter Frequenzteiler F abgeleitet werden, der vorzugsweise auf die nächste ganze Zahl gesetzt wird. Daraus folgt, dass anstelle der Impulsfrequenz f_{D1} in äquivalenter Weise auch die Schweißdrahtvorschubgeschwindigkeit v_{D1} an das empfangende Schweißgerät 1b gesendet werden könnte, wenn in beiden Schweißgeräten 1a, 1b die Schweißkennlinie hinterlegt ist.

In Fig.6 ist ein Tandem-Impulsschweißprozess dargestellt mit f_{D1} = f_{D2} (also Frequenzteiler F = 1) und mit einer Phasenverschiebung t_{P} von 90°. Zusätzlich sind in beiden Impulsschweißprozessen in den Grundstromphasen kurze Zwischenimpulse ZP1, ZP2 vorgesehen, also kurze Anstiege des Schweißstromes I_{S1}, I_{S2}. Die Dauer und der Anstieg der Zwischenimpulse ZP1, ZP2 kann natürlich in den Schweißgeräten 1a, 1b hinterlegt sein oder konfiguriert werden. Hierbei ist es natürlich möglich, dass Zwischenimpulse ZP1, ZP2 nicht in allen Impulsschweißprozessen des Mehrfach-Impulsschweißverfahrens vorgesehen sind. Gleichfalls ist es denkbar, dass solche Zwischenimpulse ZP1, ZP2 nicht in jedem Schweißzyklus SZ1,SZ2 vorgesehen sind, sondern nur in jedem x-ten Schweißzyklus, was ebenfalls hinterlegt oder konfiguriert werden kann. Vorzugsweise werden die Zwischenimpulse ZP1, ZP2 in einem Impulsschweißprozess so gesetzt, dass diese in der Impulsstromphase des jeweils anderen Impulsschweißprozesses liegen. Das kann beispielsweise sehr einfach bei einer Phasenverschiebung von 180° erreicht werden, bei der sich eine Grundstromphase und eine Impulsstromphase in den beiden Impulsschweißprozessen überlappen.

Die erfindungsgemäße Synchronisierung der Impulsschweißprozesse eines Mehrfach-Impulsschweißverfahrens kann während des Schweißens nach Bedarf gestartet und gestoppt werden. Vorzugsweise wird die Synchronisierung beim Starten des Schweißens erst gestartet nachdem die Lichtbögen der einzelnen Impulsschweißprozesse stabil brennen, also nach dem Zünden der Lichtbögen oder wenn die eingestellte Schweißdrahtvorschubgeschwindigkeit v_{D} erreicht ist. Auch in der Endphase des Mehrfach-Impulsschweißprozesses, beispielsweise wenn begonnen wird die Schweißdrahtvorschubgeschwindigkeit v_{D} zu reduzieren, wird die Synchronisation vorzugsweise beendet. Das kann automatisiert von den Schweißgeräten 1a, 1b erfolgen, oder manuell durch den Schweißer.

Es ist auch möglich, dass sich während des Schweißens die Synchronisation der Impulsschweißprozesse verändert. Beispielsweise kann während des Schweißens ein anderer Frequenzteiler F eingestellt werden oder sich ergeben. Es kann aber auch die Schweißdrahtvorschubgeschwindigkeit des nachgeführten Impulsschweißprozesses verändert werden, was ebenfalls eine andere Impulsfrequenz f_{D2} oder Frequenzteiler F bewirken kann. Gleichfalls kann eine andere Phasenverschiebung t_{P} zwischen Impulsschweißprozessen gefordert oder eingestellt werden. Solche Änderungen können beispielsweise vom Mehrfach-Impulsschweißprozess (z.B. ein automatisiert ablaufendes Schweißprogramm) und/oder vom Schweißer bewirkt werden.

Beispielsweise kann die Abweichung zwischen einer vom führenden Impulsschweißprozess geforderten Impulsfrequenz f_{D1}, auf die sich der nachgeführten Impulsschweißprozess synchronisiert, und einer Impulsfrequenz f_{D2}, die sich aus der hinterlegten Schweißkennlinie (z.B. wie in Fig.5) aufgrund der eingestellten Schweißparameter ergeben würde, einen im Schweißgerät 1a, 1b konfigurierten oder hinterlegten Grenzwert überschreiten. In diesem Fall kann die Steuereinheit 7a, 7b des Schweißgerätes 1a, 1b beispielsweise auf den nächsten Frequenzteiler F umschalten, beispielsweise von F = 1 auf F = 2 oder auch in die andere Richtung, also von F = 2 auf F = 1. Dabei kann bedarfsweise auch eine Phasenverschiebung t_{P} angepasst werden.

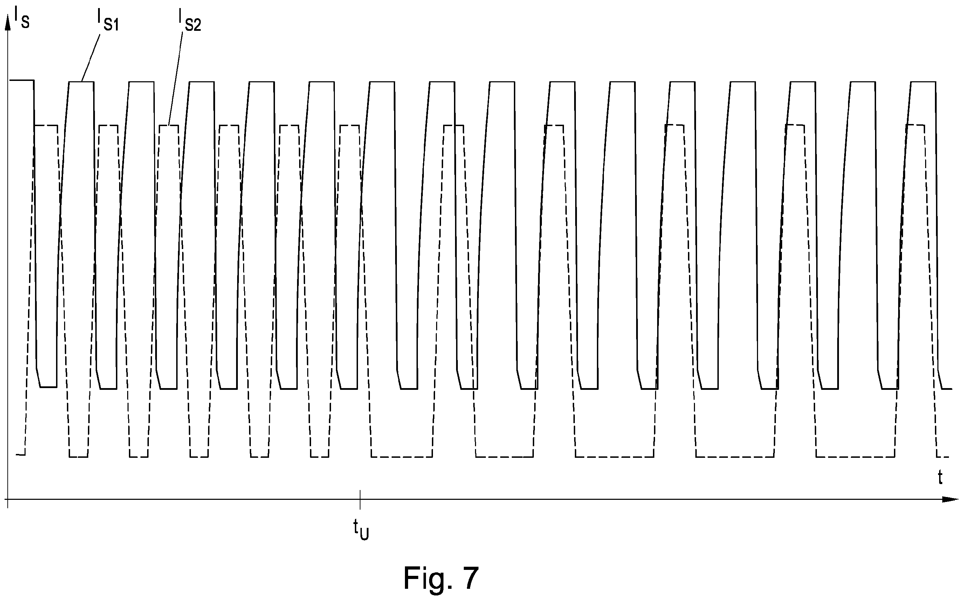

In Fig.7 ist beispielsweise das Umschalten zwischen einer Synchronisation mit gleichen Impulsfrequenzen f_{D1}, f_{D2} in einem Tandem-Impulsschweißverfahren, f_{D1} = f_{D2}, und einer Phasenverschiebung t_{P} von 180° auf eine halbierte Impulsfrequenz f_{D2} des nachgeführten Impulsschweißprozesses, also f_{D2} = f_{D1} / 2 oder Frequenzteiler F = 2, und einer Phasenverschiebung t_{P} von 0° dargestellt. Gezeigt sind der Schweißstrom I_{S1} des führenden Impulsschweißprozesses und der Schweißstrom I_{S2} des nachgeführten Impulsschweißprozesses (strichliert) über die Zeit t. Das Umschalten erfolgt zum Zeitpunkt t_{U}. Mit der Umschaltung wird auf die neue Impulsfrequenz f_{D2} umgeschaltet. Die neue Phasenlage wird gegebenenfalls innerhalb von wenigen Schweißzyklen SZ1, SZ2, je nach Implementierung der Steuerung, eingestellt. Im Beispiel nach Fig.2 wird die neue Phasenlage innerhalb von vier Schweißzyklen SZ1 des führenden Impulsschweißprozesses eingestellt.

## Patentansprüche

1. Verfahren zur Synchronisierung von zumindest zwei Impulsschweißprozessen zur Durchführung eines Mehrfach-Impulsschweißverfahrens, wobei ein Impulsschweißprozess aus periodisch mit einer Impulsfrequenz (f_{D1}, f_{D2}) wiederholten Schweißzyklen (SZ1, SZ2) mit einer Impulsstromphase und einer Grundstromphase besteht, wobei jeder Impulsschweißprozess mit einem Schweißgerät (1a, 1b) durchgeführt wird, **dadurch gekennzeichnet, dass** die Schweißgeräte (1a, 1b) mittels einer Kommunikationsverbindung (15) miteinander verbunden werden und über die Kommunikationsverbindung (15) eine Synchronisationsinformation (SI) von einem sendenden Schweißgerät (1a) an zumindest ein empfangendes Schweißgerät (1b) gesendet wird **und dass** diese Synchronisationsinformation (SI) im empfangenden Schweißgerät (1b) verwendet wird, um den mit dem empfangenden Schweißgerät (1b) ausgeführten Impulsschweißprozess auf den mit dem sendenden Schweißgerät (1a) ausgeführten Impulsschweißprozess zu synchronisieren.

2. Verfahren nach Anspruch 1, **dadurch gekennzeichnet, dass** das sendende Schweißgerät (1a) als Synchronisationsinformation (SI) zumindest einen Synchronisationspuls (SP) an zumindest ein empfangendes Schweißgerät (1b) sendet, wobei der zumindest eine Synchronisationspuls (SP) in einem definierten zeitlichen Bezug zum Schweißzyklus (SZ1) des Impulsschweißprozesses des sendenden Schweißgerätes (1a) steht, und der Schweißzyklus (SZ2) des Impulsschweißprozess des empfangenden Schweißgerätes (1b) auf den empfangenen Synchronisationspuls (SP) synchronisiert wird.

3. Verfahren nach Anspruch 2, **dadurch gekennzeichnet, dass** die Impulsfrequenz (f_{D2}) des Impulsschweißprozesses des empfangenden Schweißgerätes (1b) im empfangenden Schweißgerät (1b) bekannt ist oder aus einer bekannten Schweißkennlinie ermittelt wird.

4. Verfahren nach Anspruch 2, **dadurch gekennzeichnet, dass** als Synchronisationsinformation (SI) zusätzlich die Impulsfrequenz (f_{D1}) des sendenden Schweißgerätes (1a) oder die vom empfangenden Schweißgerät (1b) einzustellende Impulsfrequenz (f_{D2}) an das empfangende Schweißgerät (1b) gesendet wird.

5. Verfahren nach Anspruch 4, **dadurch gekennzeichnet, dass** im empfangenden Schweißgerät (1b) mittels eines bekannten Frequenzteilers (F) aus der erhaltenen Impulsfrequenz (f_{D1}) des sendenden Schweißgerätes (1a) die vom empfangenden Schweißgerät (1b) einzustellende Impulsfrequenz (f_{D2}) ermittelt wird.

6. Verfahren nach Anspruch 2, **dadurch gekennzeichnet, dass** das sendende Schweißgerät (1a) als Synchronisationsinformation (SI) laufend Synchronisationspulse (SP) mit der Impulsfrequenz (f_{D1}) des sendenden Schweißgerätes (1a) an das empfangende Schweißgerät (1b) sendet.

7. Verfahren nach Anspruch 6, **dadurch gekennzeichnet, dass** das empfangende Schweißgerät (1b) aus der Periode der empfangenen Synchronisationspulse (SP) die Impulsfrequenz (f_{D1}) des sendenden Schweißgerätes (1a) ermittelt und daraus mittels eines bekannten Frequenzteilers (F) die im empfangenden Schweißgerät (1b) einzustellende Impulsfrequenz (f_{D2}) ermittelt.

8. Verfahren nach Anspruch 5 oder 7, **dadurch gekennzeichnet, dass** der Frequenzteiler (F) im empfangenden Schweißgerät (1b) aus einer bekannten Schweißkennlinie mindestens eines Schweißparameters ermittelt wird und aus der Impulsfrequenz (f_{D1}) des sendenden Schweißgerätes (1a), oder der zugehörigen Schweißdrahtvorschubgeschwindigkeiten (v_{D}), und dem Frequenzteiler (F) die vom empfangenden Schweißgerät (1b) einzustellende Impulsfrequenz (f_{D2}) ermittelt wird.

9. Verfahren nach Anspruch 8, **dadurch gekennzeichnet, dass** aus der Schweißkennlinie des Impulsschweißprozesses des empfangenden Schweißgerätes (1b) eine für den Impulsschweißprozess benötigte Impulsfrequenz (f_{D2}) ermittelt wird, wobei aus der benötigten Impulsfrequenz (f_{D2}) und der erhaltenen Impulsfrequenz (f_{D1}) des sendenden Schweißgerätes (1a), oder der zugehörigen Schweißdrahtvorschubgeschwindigkeiten (v_{D}), der Frequenzteiler (F) ermittelt wird.

10. Verfahren nach Anspruch 9, **dadurch gekennzeichnet, dass** als Frequenzteiler (F) das auf die nächstgrößere oder nächstkleiner ganze Zahl gesetzte Verhältnis zwischen der erhaltenen Impulsfrequenz (f_{D1}) des sendenden Schweißgerätes (1a) und der benötigten Impulsfrequenz (f_{D2}) verwendet wird.

11. Verfahren nach einem der Ansprüche 1 bis 10, **dadurch gekennzeichnet, dass** der Synchronisationspuls (SP) mit einer vorgegebenen Phasenverschiebung (t_{P}) zum Beginn des Schweißzyklus (SZ1) im sendenden Schweißgerät (1a) gesendet wird und/oder der Schweißzyklus (SZ2) im empfangenden Schweißgerät (1b) mit einer vorgegebenen Phasenverschiebung (t_{P}) nach dem Empfang des Synchronisationspulses (SP) gestartet wird.

12. Verfahren nach Anspruch 11, **dadurch gekennzeichnet, dass** die vom empfangenden Schweißgerät (1b) einzustellende Phasenverschiebung (t_{P}) als zusätzliche Synchronisationsinformation (SI) vom sendenden Schweißgerät (1a) an zumindest ein empfangendes Schweißgerät (1b) gesendet wird.

13. Verfahren nach einem der Ansprüche 1 bis 12, **dadurch gekennzeichnet, dass** die Synchronisation während des Mehrfach-Impulsschweißverfahrens gestartet oder gestoppt wird.

14. Verfahren nach einem der Ansprüche 1 bis 13, **dadurch gekennzeichnet, dass** die Impulsfrequenz (f_{D1}) des Impulsschweißprozesses des sendenden Schweißgerätes (1a) oder die Impulsfrequenz (f_{D2}) des Impulsschweißprozesses eines nachgeführten Impulsschweißprozesses und/oder eine Phasenverschiebung (t_{P}) während des Mehrfach-Impulsschweißverfahrens geändert wird.

15. Anordnung zur Durchführung eines Mehrfach-Impulsschweißverfahrens mit zumindest zwei Schweißgeräten (1a, 1b) zur Durchführung von zumindest zwei Impulsschweißprozessen, wobei ein Impulsschweißprozess aus periodisch mit einer Impulsfrequenz (f_{D1}, f_{D2}) wiederholten Schweißzyklen (SZ1, SZ2) mit einer Impulsstromphase und einer Grundstromphase besteht, **dadurch gekennzeichnet, dass** die Schweißgeräte (1a, 1b) mittels einer Kommunikationsverbindung (15) miteinander verbunden sind und ein sendendes Schweißgerät (1a) über die Kommunikationsverbindung (15) eine Synchronisationsinformation (SI) an zumindest ein empfangendes Schweißgerät (1b) sendet **und dass** das empfangende Schweißgerät (1b) diese Synchronisationsinformation (SI) verwendet, um den mit dem empfangenden Schweißgerät (1b) ausgeführten Impulsschweißprozess auf den mit dem sendenden Schweißgerät (1a) ausgeführten Impulsschweißprozess zu synchronisieren.
